# EUROPEAN PATENT SPECIFICATION

(11) **EP 4 462 760 B1**
(45) Date of publication and mention of the grant of the patent: **11.03.2026**
(21) Application number: 23851243.8
(22) Date of filing: 10.04.2023
(51) Int. Cl.: H04M 1/02

(54) **ELECTRONIC DEVICE**
ELEKTRONISCHE VORRICHTUNG
DISPOSITIF ÉLECTRONIQUE

(30) Priority: 08.08.2022 CN 202210945385
(43) Date of publication of application: 13.11.2024
(73) Proprietor: Honor Device Co., Ltd., Shenzhen, Guangdong 518040 (CN)
(72) Inventor: TANG, Zhenrui, Shenzhen, Guangdong 518040 (CN); YAO, Wenxing, Shenzhen, Guangdong 518040 (CN); DI, Xijian, Shenzhen, Guangdong 518040 (CN); LIU, Hailin, Shenzhen, Guangdong 518040 (CN); YU, Dengpan, Shenzhen, Guangdong 518040 (CN)
(74) Representative: Gill Jennings & Every LLP
(86) International application number: PCT/CN2023/087263
(87) International publication number: WO 2024/032013

(56) References cited:
- WO-A1-2020/151481
- CN-A- 108 845 455
- CN-A- 110 809 072
- CN-A- 111 970 422
- CN-A- 112 929 472
- CN-U- 212 785 453
- CN-U- 215 682 380
- US-A1- 2011 255 000

## Description

### TECHNICAL FIELD

This application relates to the field of electronic technologies, and specifically, to an electronic device.

### BACKGROUND

An existing electronic device that includes a front-facing camera usually includes a housing, the front-facing camera, and a screen. A process of mounting the front-facing camera is as follows: The camera and each component are assembled together through adhesion to form a camera module; the camera module is further mounted in the housing, and a lens holder of the camera module is enabled to be located in a limiting groove of the housing, so that a lens of the camera module is limited through cooperative limiting of the limiting groove of the housing and the lens holder; and then the screen is mounted on a side that is of the housing and on which the camera module is disposed, and a location of a silkscreen ring on the screen is enabled to be disposed corresponding to a location of the lens.

The front-facing camera assembly structure of the electronic device includes a plurality of size errors, which affects assembly precision and a yield of the entire electronic device. CN111970422A discloses a front camera positioning structure comprising a screen assembly, housing, support, and alignment gaps. US20110255000A1 discloses electronic device camera alignment structures using ring-shaped members, engagement features, and housing-mounted openings.

### SUMMARY

To overcome the foregoing problems existing in the conventional technology, a main purpose of this application is to provide an electronic device that can increase assembly precision and a yield of the entire electronic device.

To achieve the foregoing objective, the following technical solutions are specifically used in this application.

This application provides an electronic device. The electronic device includes:
a housing, where one side of the housing is provided with a limiting groove;
a camera module, where the camera module is mounted in the housing, and the camera module includes a lens;
a limiting bracket, where the limiting bracket is sleeved on the lens, and the limiting bracket is disposed in the limiting groove, to limit the lens through cooperative limiting of the limiting bracket and the limiting groove; and
a screen, where the screen is disposed on a side that is of the housing and on which the camera module is disposed, a silkscreen ring is provided on the screen, and a location of the silkscreen ring is disposed corresponding to a location of the lens. In this embodiment, the limiting bracket is disposed, and the lens can be limited through cooperative limiting of the limiting bracket and the limiting groove of the housing, so that a positioning eccentricity dimension chain of the lens is reduced, and the lens is precisely aligned with the silkscreen ring on the screen, thereby increasing assembly precision and a yield of the entire electronic device.

In some embodiments, a shape of the limiting hole is disposed corresponding to a shape of the lens, and an outer peripheral shape of the limiting bracket body is disposed corresponding to a shape of the limiting groove. In this embodiment, the shape of the limiting hole is disposed corresponding to the shape of the lens, so that the limiting bracket can better cooperate with the lens in limiting, and the outer peripheral shape of the limiting bracket is disposed corresponding to the shape of the limiting groove, so that the limiting bracket can better cooperate with the limiting groove in limiting, thereby increasing positioning precision of the lens.

In some embodiments, the first limiting adjustment member is disposed on a side of an inner peripheral sidewall of the limiting hole, the limiting bracket body is made of a hard material, and the first limiting adjustment member is made of a soft material. In this embodiment, the first limiting adjustment member is disposed on the side of the inner peripheral sidewall of the limiting hole, to eliminate an assembly gap between the lens and the limiting bracket, thereby increasing positioning precision of the lens.

In some embodiments, a plurality of the first limiting adjustment members are disposed, and the plurality of first limiting adjustment members are disposed at intervals on the side of the inner peripheral sidewall of the limiting hole. In this embodiment, the plurality of first limiting adjustment members are disposed at intervals on the inner peripheral sidewall of the limiting hole, instead of disposing the first limiting adjustment member on an entire half of the inner peripheral sidewall of the limiting hole, thereby reducing use of materials of the first limiting adjustment member and reducing costs.

In some embodiments, the second limiting adjustment member is disposed on a side of an outer peripheral sidewall of the limiting bracket body, the limiting bracket body is made of a hard material, and the second limiting adjustment member is made of a soft material. In this embodiment, the second limiting adjustment member is disposed on the side of the outer peripheral sidewall of the limiting bracket body, to eliminate an assembly gap between the limiting bracket and the housing, thereby increasing positioning precision of the lens.

In some embodiments, a plurality of the second limiting adjustment members are disposed, and the plurality of second limiting adjustment members are disposed at intervals on the side of the outer peripheral sidewall of the limiting bracket body. In this embodiment, the plurality of second limiting adjustment members are disposed at intervals on the outer peripheral sidewall of the limiting bracket body, instead of disposing the second limiting adjustment member on an entire half of the outer peripheral sidewall of the limiting bracket body, thereby reducing use of materials of the second limiting adjustment member and reducing costs.

In some embodiments, the camera module further includes a lens holder, a photosensitive chip, and a rigid-flexible board, and the lens, the lens holder, the photosensitive chip, and the rigid-flexible board are connected in sequence to form the camera module.

In some embodiments, the lens is connected to the lens holder through adhesion, and the lens holder is connected to the rigid-flexible board through adhesion.

Correspondingly, this application further provides a manufacturing method for an electronic device. The electronic device includes a housing, a limiting bracket, a camera module, and a screen. The manufacturing method includes:
sleeving the limiting bracket on a lens of the camera module;
separately mounting the limiting bracket and the camera module in the housing, and enabling the limiting bracket to cooperate with a limiting groove of the housing in limiting to limit the lens; and
mounting the screen on a side that is of the housing and on which the camera module is disposed, and enabling a location of a silkscreen ring on the screen to be disposed corresponding to a location of the lens.

In this embodiment, the limiting bracket is sleeved on the lens of the camera module, then the limiting bracket and the camera module are separately mounted in the housing, and the limiting bracket is enabled to cooperate with the limiting groove of the housing in limiting to limit the lens, so that a positioning eccentricity dimension chain of the lens is reduced, and the lens is precisely aligned with the silkscreen ring on the screen, thereby increasing assembly precision and a yield of the entire electronic device.

In some embodiments, before the step of sleeving the limiting bracket on a lens of the camera module, the method further includes:
assembling the limiting bracket, where the assembling the limiting bracket specifically includes:
disposing a first limiting adjustment member on a side of an inner peripheral sidewall of a limiting hole of a limiting bracket body; and
disposing a second limiting adjustment member on a side of an outer peripheral sidewall of the limiting bracket body, to form the limiting bracket.

In this embodiment, the first limiting adjustment member is disposed on the side of the inner peripheral sidewall of the limiting hole, and the second limiting adjustment member is disposed on the side of the outer peripheral sidewall of the limiting bracket body, to eliminate an assembly gap between the lens and the limiting bracket and an assembly gap between the limiting bracket and the housing, thereby increasing positioning precision of the lens.

Compared with the conventional technology, the electronic device in this application includes a housing, a camera module, a limiting bracket, and a screen. One side of the housing is provided with a limiting groove, the camera module is mounted in the housing, and the camera module includes a lens. The limiting bracket is sleeved on the lens, and the limiting bracket is disposed in the limiting groove, to limit the lens through cooperative limiting of the limiting bracket and the limiting groove. The screen is disposed on a side that is of the housing and on which the camera module is disposed, and a silkscreen ring is provided on the screen, where a location of the silkscreen ring is disposed corresponding to a location of the lens. In this application, the limiting bracket is disposed, and the lens is limited through cooperative limiting of the limiting bracket and the limiting groove of the housing, so that a positioning eccentricity dimension chain of the lens is reduced, thereby increasing assembly precision and a yield of the entire electronic device.

### BRIEF DESCRIPTION OF DRAWINGS

FIG. 1 is an exploded view of an electronic device including a camera module in the conventional technology;
FIG. 2 is a three-dimensional exploded view of a camera module in the conventional technology;
FIG. 3 is a schematic diagram of a mounting structure of a camera module in the conventional technology;
FIG. 4 is an exploded view obtained from another perspective of an electronic device including a camera module in the conventional technology;
FIG. 5 is a diagram of a dimension chain in a camera module mounting solution in the conventional technology;
FIG. 6 is a schematic diagram of a mounting structure of a camera module according to an embodiment of this application;
FIG. 7 is an exploded view of an electronic device including a camera module according to an embodiment of this application;
FIG. 8 is a diagram of a structure of a limiting bracket according to an embodiment of this application;
FIG. 9 is a diagram of assembly of a camera module and a limiting bracket according to an embodiment of this application; and
FIG. 10 is a diagram of a dimension chain in a camera module mounting solution according to an embodiment of this application.

Reference numerals:
1. housing; 11. limiting groove; 2. camera module; 3. limiting bracket; 31. limiting bracket body; 311. limiting hole; 32. first limiting adjustment member; 33. second limiting adjustment member; 4. screen; 41. silkscreen ring; 1'. housing; 11'. limiting groove; 2'. camera module; 21'. lens; 22'. lens holder; 23'. photosensitive chip; 24'. rigid-flexible board; 25'. first adhesive layer; 26'. second adhesive layer; 3'. screen; and 31'. silkscreen ring.

### DESCRIPTION OF EMBODIMENTS

To make the objectives, technical solutions, and advantages of this application clearer, the following further describes this application in detail with reference to the accompanying drawings and embodiments. It should be understood that specific embodiments described herein are merely used to explain this application, but are not intended to limit this application.

In the descriptions of this application, unless otherwise specified and defined explicitly, the terms "first" and "second" are merely intended for the purpose of description, and shall not be understood as an indication or implication of relative importance; unless otherwise specified or stated, the term "a plurality of" means two or more; and the terms such as "connection" and "fastening" should be understood in a broad sense. For example, the "connection" may be a fixed connection, a detachable connection, an integrated connection, or an electrical connection; or may be a direct connection or an indirect connection through an intermediate medium. A person of ordinary skill in the art may understand specific meanings of the foregoing terms in the present invention based on a specific situation.

In the descriptions of the specification, it should be understood that the directional words such as "up" and "down" described in the embodiments of this application are described from perspectives shown in the accompanying drawings, and shall not be understood as a limitation on the embodiments of this application. In addition, in the context, it should be further understood that when it is mentioned that an element is connected to another element, the element can be directly connected to the another element, or may be indirectly connected to the another element through an intermediate element.

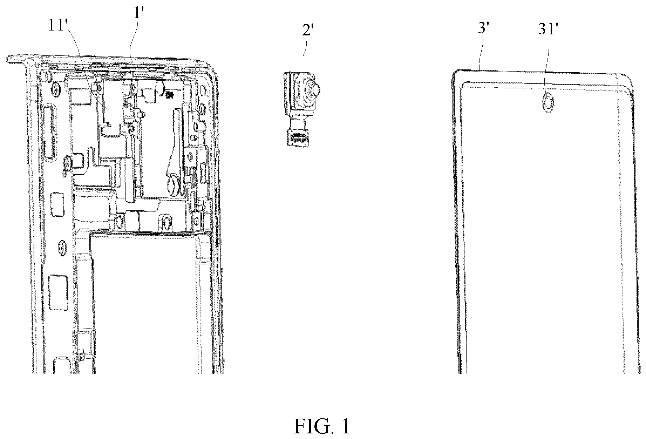

Referring to FIG. 1, FIG. 1 is an exploded view of an electronic device including a camera module in the conventional technology. In the conventional technology, an electronic device with a front-facing camera usually includes a housing 1', a camera module 2', and a screen 3'. The housing 1' and the screen 3' can be assembled together to form an accommodating cavity, and a silkscreen ring 31' is provided on the screen 3'. The camera module 2' is mounted in the accommodating cavity formed by the housing 1' and the screen 3', and a location of the silkscreen ring 31' is disposed corresponding to a location of a lens 21' of the camera module 2', so that external light can enter the camera module 2' through the silkscreen ring 31', and the camera module 2' processes the light to form an image.

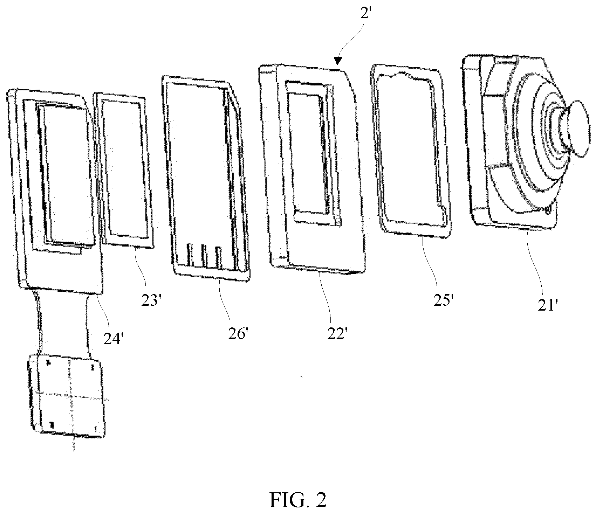

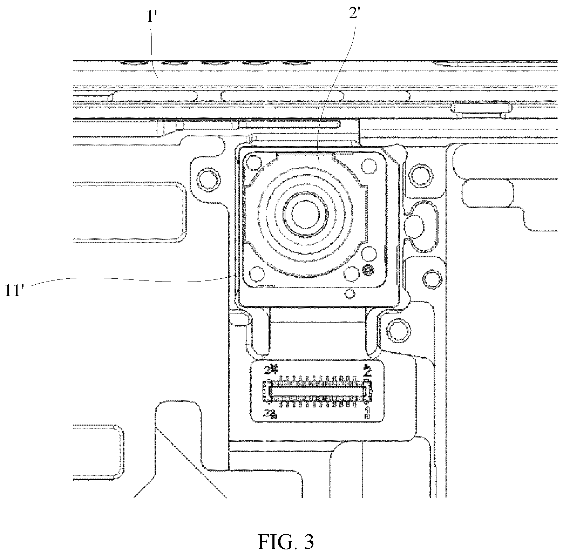

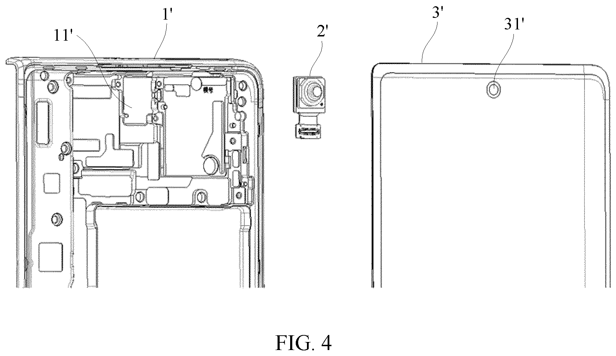

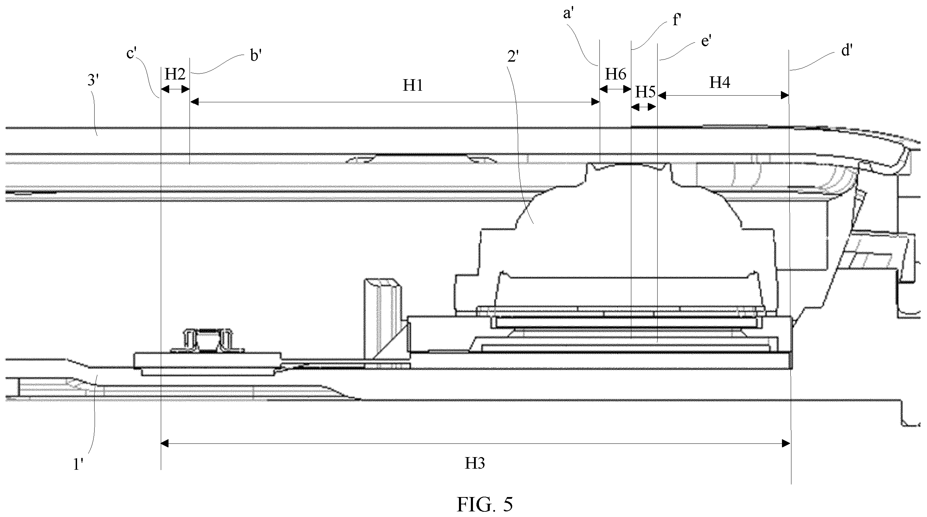

Referring to FIG. 2, FIG. 2 is a three-dimensional exploded view of a camera module in the conventional technology. The camera module 2' in the conventional technology includes the lens 21', a lens holder 22', a photosensitive chip 23', and a rigid-flexible board 24'. During assembly of the camera module 2', the lens 21' is adhered to the lens holder 22' by using a first adhesive layer 25', the photosensitive chip 23' is further disposed between the rigid-flexible board 24' and the lens holder 22', and then the lens holder 22' is adhered to the rigid-flexible board 24' by using a second adhesive layer 26', to form a finished product of the camera module 2'. Referring to FIG. 3 and FIG. 4, FIG. 3 is a schematic diagram of a mounting structure of a camera module in the conventional technology, and FIG. 4 is an exploded view obtained from another perspective of an electronic device including a camera module in the conventional technology. During mounting of the camera module 2', the camera module 2' is mounted in a limiting groove 11' of the housing 1', and the lens holder 22' of the camera module 2' is enabled to cooperate with the limiting groove 11' of the housing 1' in limiting to limit the lens 21' of the camera module 2'; and then the screen 3' is mounted in the housing 1', and the location of the silkscreen ring 31' on the screen 3' is enabled to be disposed corresponding to the location of the lens 21' of the camera pair module. Therefore, a positioning path of the front-facing camera in the conventional technology includes: positioning of the silkscreen ring on the screen 3', assembly positioning between the screen 3' and the housing 1', positioning of the limiting groove 11', positioning between the lens holder 22' and the limiting groove 11', and positioning of the lens 21' and the lens holder 22'. A positioning deviation of each of the foregoing components or a positioning deviation between the components ultimately affects a positioning deviation between the lens 21' and the silkscreen ring 31'. Specifically, referring to FIG. 5, FIG. 5 is a diagram of a dimension chain in a camera module mounting solution in the conventional technology. In FIG. 5, a' is a central location of the silkscreen ring 31', b' is a central location of the screen 3', c' is a central location of the housing 1', d' is a boundary location of the limiting groove 11', e' is a central location of the lens holder 22', and f' is a central location of the lens 21'. Positioning of the silkscreen ring on the screen 3' is positioning H1 between a center of the silkscreen ring and a center of the screen, assembly positioning between the screen 3' and the housing 1' is positioning H2 between the center of the screen 3' and a center of the housing 1', positioning of the limiting groove 1 1' is positioning H3 between a boundary of the limiting groove and the center of the housing 1', positioning between the lens holder 22' and the limiting groove 11' is positioning H4 between the boundary of the limiting groove and a center of the lens holder 22', positioning between the lens 21' and the lens holder 22' is positioning H5 between the center of the lens holder 22' and a center of the lens 21', and positioning between the lens 21' and the silkscreen ring 31' is positioning H6 between the center of the lens 21' and the center of the silkscreen ring 31'. It may be learned that in the conventional technology, a positioning deviation between the lens 21' and the silkscreen ring 31' is affected by at least deviations of the foregoing five types of positioning, resulting in an excessive long positioning eccentricity dimension chain of the lens 21', which affects assembly precision and a yield of the entire electronic device.

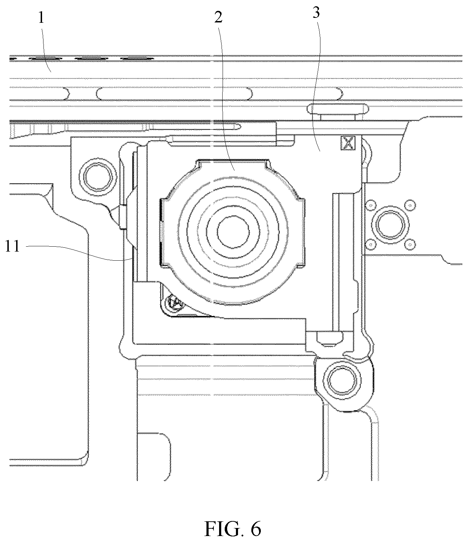

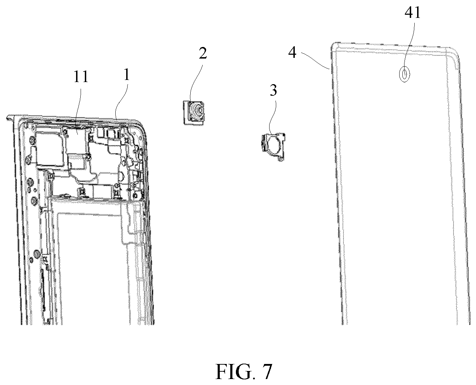

Referring to both FIG. 6 and FIG. 7, FIG. 6 is a schematic diagram of a mounting structure of a camera module according to an embodiment of this application, and FIG. 7 is an exploded view of an electronic device including a camera module according to an embodiment of this application. The electronic device includes a housing 1, a camera module 2, a limiting bracket 3, and a screen 4. The screen 4 and the housing 1 can be assembled together to form an accommodating cavity, and a silkscreen ring 41 is provided on the screen 4. The camera module 2 is mounted in the accommodating cavity formed by the screen 4 and the housing 1. The limiting bracket 3 is sleeved on the camera module 2. In addition, the limiting bracket 3 can cooperate with the housing 1 in limiting to limit a lens of the camera module 2, and a location of the lens of the camera module 2 is precisely disposed corresponding to a location of the silkscreen ring 41, so that external light can enter the camera module 2 through the silkscreen ring 41, and the camera module 2 processes the light to form an image.

Specifically, one side of the housing 1 is provided with a limiting groove 11, the limiting bracket 3 is sleeved on the lens of the camera module 2, both the limiting bracket 3 and the camera module 2 are mounted in the housing 1, and the limiting bracket 3 is enabled to be located in the limiting groove 11. The lens of the camera module 2 is limited through cooperative limiting of the limiting bracket 3 and the limiting groove 11. The screen 4 is disposed on a side that is of the housing 1 and on which the camera module 2 is disposed, and a location of the silkscreen ring 41 is disposed corresponding to a location of the lens of the camera module 2.

In this embodiment, the limiting bracket 3 is disposed, and the lens of the camera module 2 is positioned through cooperative limiting of the limiting bracket 3 and the limiting groove 11 of the housing 1, so that a positioning eccentricity dimension chain of the lens of the camera module 2 is reduced, and the lens of the camera module 2 is precisely aligned with the silkscreen ring 41 on the screen 4, thereby increasing assembly precision and a yield of the entire electronic device.

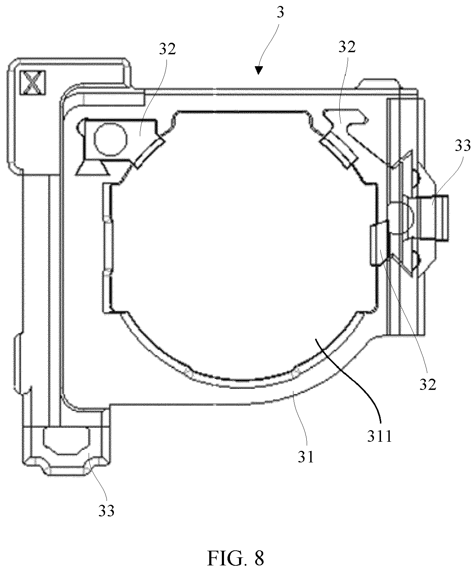

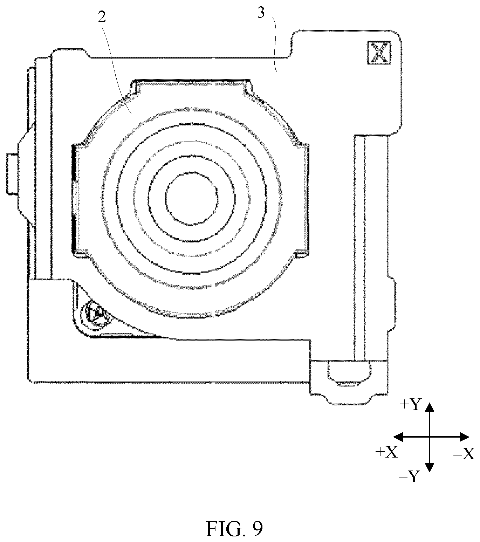

Referring to FIG. 8 and FIG. 9, FIG. 8 is a diagram of a structure of a limiting bracket according to an embodiment of this application, and FIG. 9 is a diagram of assembly of a camera module and a limiting bracket according to an embodiment of this application. The limiting bracket 3 includes a limiting bracket body 31, a first limiting adjustment member 32, and a second limiting adjustment member 33. The limiting bracket body 31 has a limiting hole 311. A shape of the limiting hole 311 is disposed corresponding to an outer peripheral shape of the lens of the camera module 2, to limit the lens of the camera module 2 through the limiting hole 311. An outer peripheral sidewall shape of the limiting bracket body 31 is disposed corresponding to a shape of the limiting groove 11, to limit the limiting bracket 3 through the limiting groove 11. The first limiting adjustment member 32 is disposed on a side of an inner peripheral sidewall of the limiting hole 311, so that appropriate extrusion force is applied to the lens of the camera module 2 by using the first limiting adjustment member 32, to stably limit the lens of the camera module 2 in the limiting hole 311, thereby preventing the lens of the camera module 2 from being displaced in the limiting hole 311. The second limiting adjustment member 33 is disposed on a side of an outer peripheral sidewall of the limiting bracket body 31, so that appropriate extrusion force is applied to the limiting bracket 3 through mutual interaction between the second limiting adjustment member 33 and an inner wall of the limiting groove 11, to stably limit the limiting bracket 3 in the limiting groove 11, thereby preventing the limiting bracket 3 from being displaced in the limiting groove 11.

The limiting bracket body 31 is made of a hard material, and the hard material may be, for example, an acrylonitrile-butadiene-styrene (Acrylonitrile-Butadiene-styrene, ABS for short) copolymer, polyoxymethylene (English full name: Polyoxymethylene, POM for short), polystyrene (English full name: Polystyrene, PS for short), polymethylmethacrylate (English full name: polymethylmethacrylate, PMMA for short), polycarbonate (English full name: Polycarbonate, PC for short), polyethylene terephthalate (English full name: Polyethylene terephthalate, PET for short), polybutylene terephthalate (English full name: polybutylene terephthalate, PBT for short), or polyphenylene oxide (English full name: Polyphenylene Oxide, PPO for short). Both the first limiting adjustment member 32 and the second limiting adjustment member 33 are made of a soft material, and the soft material may be, for example, a thermoplastic polyurethane (English full name: Thermoplastic Urethane, TPU for short) elastomer, a thermoplastic elastomer (English name: Thermoplastic elastomer, TPE for short), a thermo-plastic-rubber material (English full name: Thermo-Plastic-Rubber material, TPR for short), silicone rubber, or rubber.

In this embodiment, the first limiting adjustment member 32 is disposed on the inner peripheral sidewall of the limiting hole 311 of the limiting bracket body 31, and the second limiting adjustment member 33 is disposed on the outer peripheral sidewall of the limiting bracket body 31, to eliminate an assembly gap between the lens of the camera module 2 and the limiting bracket 3 and an assembly gap between the limiting bracket 3 and the housing 1 through an interference fit between the first limiting adjustment member 32 and the lens of the camera module 2 and an interference fit between the second limiting adjustment member 33 and the limiting groove 11 of the housing 1, thereby increasing positioning precision of the lens of the camera module 2.

In this embodiment, a plurality of first limiting adjustment members 32 are disposed, and the plurality of first limiting adjustment members 32 are disposed at intervals on the side of the inner peripheral sidewall of the limiting hole 311. Further, the plurality of first limiting adjustment members 32 are disposed in the limiting bracket body 31 through injection molding. A plurality of second limiting adjustment members 33 are disposed, and the plurality of second limiting adjustment members 33 are disposed at intervals on the side of the outer peripheral sidewall of the limiting bracket body 31. Further, the plurality of second limiting adjustment members 33 are disposed in the limiting bracket body 31 through injection molding. It may be understood that, in another embodiment, the first limiting adjustment members 32 may alternatively be disposed on an entire half of the inner peripheral sidewall of the limiting hole 311, and the second limiting adjustment members 33 may alternatively be disposed on an entire half of the outer peripheral sidewall of the limiting bracket body 31.

In this embodiment, the first limiting adjustment members 32 are disposed only on the side of the inner peripheral sidewall of the limiting hole 311, so that in an X direction or a Y direction, the lens of the camera module 2 is subjected to extrusion force only in a single direction. For example, in the X direction, the lens of the camera module 2 is subjected to force only in a +X direction, and in the Y direction, the lens of the camera module 2 is subjected to force only in a +Y direction; or in the X direction, the lens of the camera module 2 is subjected to force only in a -X direction, and in the Y direction, the camera module 2 is subjected to force only in a -Y direction. In this way, the lens of the camera module 2 is stably fastened in the limiting bracket 3, so that the assembly gap between the lens of the camera module 2 and the limiting bracket 3 is reduced, thereby increasing positioning precision of the lens of the camera module 2. In addition, in this embodiment, the second limiting adjustment members 33 are disposed only on the side of the outer peripheral sidewall of the limiting bracket body 31, so that in the X direction or the Y direction, the limiting bracket body 31 is subjected to force only in a single direction. For example, in the X direction, the limiting bracket body 31 is subjected to force only in the +X direction, and in the Y direction, the limiting bracket body 31 is subjected to force only in the +Y direction; or in the X direction, the limiting bracket body 31 is subjected to force only in the -X direction, and in the Y direction, the limiting bracket body 31 is subjected to force only in the -Y direction. In this way, the limiting bracket 3 is stably fastened in the limiting groove 11 of the housing 1, so that the assembly gap between the limiting bracket 3 and the limiting groove 11 of the housing 1 is reduced, thereby further increasing positioning precision of the lens of the camera module 2.

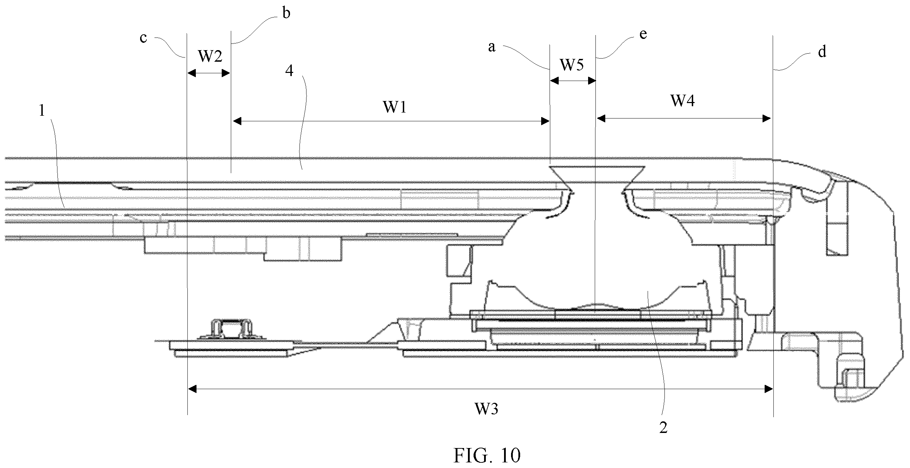

A positioning path of a front-facing camera in this application includes: positioning of the silkscreen ring on the screen 4, assembly positioning between the screen 4 and the housing 1, positioning of the limiting groove 11, and positioning between the limiting bracket 3 and the limiting groove 11. A positioning deviation of each of the foregoing components or a positioning deviation between the components ultimately affects a positioning deviation between the lens of the camera module 2 and the silkscreen ring 41 on the screen 4. Specifically, referring to FIG. 10, FIG. 10 is a diagram of a dimension chain in a camera module mounting solution according to an embodiment of this application. In FIG. 10, a is a central location of the silkscreen ring 41, b is a central location of the screen 4, c is a central location of the housing 1, d is a boundary location of the limiting groove 11, and e is a central location of the lens of the camera module 2. Positioning of the silkscreen ring on the screen 4 is positioning W1 between a center of the silkscreen ring 41 and a center of the screen 4, assembly positioning between the screen 4 and the housing 1 is positioning W2 between the center of the screen 4 and a center of the housing 1, positioning of the limiting groove 11 is positioning W3 between a boundary of the limiting groove and the center of the housing 1, positioning between the limiting bracket 3 and the limiting groove 11 is positioning W4 between the boundary of the limiting groove and a center of the limiting bracket 3, and positioning between the lens of the camera module 2 and the silkscreen ring 41 is positioning W5 between a center of the lens and the center of the silkscreen ring 41. It may be learned that, a positioning deviation between the lens of the camera module 2 and the silkscreen ring 41 in this application is affected by a maximum of four positioning deviations. Compared with the conventional technology, a positioning deviation between the lens of the camera module 2 and a lens holder and a positioning deviation between the lens holder and the limiting groove 11 are reduced, so that a positioning eccentricity dimension chain of the lens of the camera module 2 is reduced, thereby increasing assembly precision and a yield of the entire electronic device.

In the conventional technology, the housing of the electronic device is directly used to position the lens holder of the camera module, and as a result, the positioning eccentricity dimension chain of the lens of the photographing module is long, and there is a high requirement on assembly precision of the camera module 2. In this application, the housing 1 is used to position the limiting bracket 3, so that the positioning eccentricity dimension chain of the lens of the camera module 2 is reduced, and a requirement on assembly precision of the camera module 2 is reduced.

The foregoing electronic device may be a tablet, a mobile phone, or the like that has a front camera.

Correspondingly, this application further discloses a manufacturing method for an electronic device. The manufacturing method is used to manufacture the electronic device in any one of the foregoing embodiments. Specifically, the manufacturing method includes the following steps.
S11: Assemble a limiting bracket.

Specifically, a limiting hole is provided on a limiting bracket body, where a shape of the limiting hole is disposed corresponding to an outer peripheral shape of a lens of a camera module. A first limiting adjustment member is disposed on a side of an inner peripheral sidewall of the limiting hole of the limiting bracket body, and a second limiting adjustment member is disposed on a side of an outer peripheral sidewall of the limiting bracket body, to form the limiting bracket through assembly.

S12: Sleeve the limiting bracket on the lens of the camera module.

S13: Separately mount the limiting bracket and the camera module in a housing, and enable the limiting bracket to cooperate with a limiting groove of the housing in limiting to limit the lens.

Specifically, the housing is provided with the limiting groove, where a shape of the limiting groove is disposed corresponding to an outer peripheral shape of the limiting bracket; the limiting bracket is further sleeved on the lens of the camera module; and the limiting bracket and the camera module are separately mounted in the housing, and the limiting bracket is enabled to cooperate with the limiting groove in limiting to position the lens of the camera module.

S14: Mount a screen on a side that is of the housing and on which the camera module is disposed, and a location of a silkscreen ring on the screen is enabled to be disposed corresponding to a location of the lens.

In this application, the limiting bracket 3 is disposed, and the lens of the camera module 2 is positioned through cooperative limiting of the limiting bracket 3 and limiting groove 11 of the housing 1, so that a positioning eccentricity dimension chain of the lens of the camera module 2 is reduced, and the lens of the camera module 2 is precisely aligned with the silkscreen ring 41 on the screen 4, thereby increasing assembly precision and a yield of the entire electronic device.

The foregoing descriptions are merely preferred specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. An electronic device, comprising:
a housing (1), wherein one side of the housing is provided with a limiting groove (11);
a camera module (2), wherein the camera module is mounted in the housing, and the camera module comprises a lens (21);
a limiting bracket (3), wherein the limiting bracket comprises a limiting bracket body (31), a first limiting adjustment member (32) and a second limiting adjustment member (33); the limiting bracket body has a limiting hole (311), the first limiting adjustment member is provided on the inner peripheral sidewall of the limiting hole, the second limiting adjustment member is provided on the outer peripheral sidewall of the limiting bracket body; the limiting bracket is sleeved on the lens, and the limiting bracket is disposed in the limiting groove, to position the lens by engagement between the limiting bracket and the limiting groove; and
a screen (4), wherein the screen is mounted on the housing on the same side as the camera module, a printed ring (41) defining an optical aperture for the lens is provided on the screen, and the printed ring is located at the position of the lens.

2. The electronic device according to claim 1, wherein the limiting hole has a shape matching an outer peripheral shape of the lens, and an outer peripheral shape of the limiting bracket body matches a shape of the limiting groove.

3. The electronic device according to claim 2, wherein the limiting bracket body is made of a hard material.

4. The electronic device according to claim 3, wherein the first limiting adjustment member is made of a soft material.

5. The electronic device according to claim 4, wherein a plurality of the first limiting adjustment members are disposed, and the plurality of first limiting adjustment members are disposed at intervals on the side of the inner peripheral sidewall of the limiting hole.

6. The electronic device according to claim 3, wherein the second limiting adjustment member is made of a soft material.

7. The electronic device according to claim 6, wherein a plurality of the second limiting adjustment members are disposed, and the plurality of second limiting adjustment members are disposed at intervals on the side of the outer peripheral sidewall of the limiting bracket body.

8. The electronic device according to any one of claims 1~7, wherein the camera module further comprises a lens holder, a photosensitive chip, and a rigid-flexible board, and the lens, the lens holder, the photosensitive chip, and the rigid-flexible board are connected in sequence to form the camera module.

9. The electronic device according to claim 8, wherein the lens is connected to the lens holder through adhesion, and the lens holder is connected to the rigid-flexible board through adhesion.

## Patentansprüche

1. Elektronisches Gerät, umfassend:
ein Gehäuse (1), wobei eine Seite des Gehäuses mit einer Begrenzungsnut (11) versehen ist;
ein Kameramodul (2), wobei das Kameramodul im Gehäuse montiert ist und das Kameramodul eine Linse (21) umfasst;
eine Begrenzungshalterung (3), wobei die Begrenzungshalterung einen Begrenzungshalterungskörper (31), ein erstes Begrenzungselement (32) und ein zweites Begrenzungselement (33) umfasst; der Begrenzungshalterungskörper weist eine Begrenzungsöffnung (311) auf, das erste Begrenzungselement ist an der inneren Seitenwand der Begrenzungsöffnung angeordnet, das zweite Begrenzungselement ist auf der äußeren Seitenwand des Begrenzungshalterungskörpers angeordnet; die Begrenzungshalterung ist über die Linse gestülpt und in der Begrenzungsnut angeordnet, um die Linse durch die Verbindung zwischen Begrenzungshalterung und Begrenzungsnut zu positionieren; und
einen Bildschirm (4), wobei der Bildschirm auf derselben Seite des Gehäuses wie das Kameramodul montiert ist, ein bedruckter Ring (41), der eine optische Öffnung für die Linse definiert, auf dem Bildschirm angebracht ist und der bedruckte Ring sich an der Position der Linse befindet.

2. Das elektronische Gerät gemäß Anspruch 1, wobei die Begrenzungsöffnung eine zur äußeren Kontur der Linse passende Form aufweist und die äußere Kontur des Begrenzungshalterungskörpers mit der Form der Begrenzungsnut übereinstimmt.

3. Das elektronische Gerät gemäß Anspruch 2, wobei der Begrenzungshalterungskörper aus einem harten Material besteht.

4. Das elektronische Gerät gemäß Anspruch 3, wobei das erste Begrenzungselement aus einem weichen Material besteht.

5. Das elektronische Gerät gemäß Anspruch 4, wobei mehrere erste Begrenzungselemente angeordnet sind und die mehreren ersten Begrenzungselemente in Abständen an der inneren Seitenwand der Begrenzungsöffnung angebracht sind.

6. Das elektronische Gerät gemäß Anspruch 3, wobei das zweite Begrenzungselement aus einem weichen Material besteht.

7. Das elektronische Gerät gemäß Anspruch 6, wobei mehrere zweite Begrenzungselemente angeordnet sind und die mehreren zweiten Begrenzungselemente in Abständen an der äußeren Seitenwand des Begrenzungshalterungskörpers angebracht sind.

8. Das elektronische Gerät gemäß einem der Ansprüche 1 bis 7, wobei das Kameramodul ferner einen Linsenhalter, einen photosensitiven Chip und eine starr-flexible Leiterplatte umfasst, und wobei die Linse, der Linsenhalter, der photosensitive Chip und die starr-flexible Leiterplatte nacheinander verbunden sind, um das Kameramodul zu bilden.

9. Das elektronische Gerät nach Anspruch 8, wobei die Linse durch Verklebung mit dem Linsenhalter verbunden ist und der Linsenhalter durch Verklebung mit der starr-flexiblen Leiterplatte verbunden ist.

## Revendications

1. Un dispositif électronique, comprenant :
un boîtier (1), dont un côté est pourvu d'une rainure de limitation (11) ;
un module caméra (2), ledit module étant monté dans le boîtier, et comprenant une lentille (21) ;
un support de limitation (3), lequel comprend un corps de support de limitation (31), un premier élément d'ajustement limitant (32) et un second élément d'ajustement limitant (33) ; le corps de support de limitation possède un trou de limitation (311), le premier élément d'ajustement limitant est disposé sur la paroi latérale périphérique intérieure du trou de limitation, le second élément d'ajustement limitant est disposé sur la paroi latérale périphérique extérieure du corps du support de limitation ; le support de limitation est enfilé sur la lentille, et est disposé dans la rainure de limitation, afin de positionner la lentille par engagement entre le support de limitation et la rainure de limitation ; et
un écran (4), lequel est monté sur le boîtier du même côté que le module caméra, une bague imprimée (41) définissant une ouverture optique pour la lentille est prévue sur l'écran, cette bague imprimée étant située à la position de la lentille.

2. Le dispositif électronique selon la revendication 1, dans lequel le trou de limitation présente une forme correspondant à la forme périphérique extérieure de la lentille, et la forme périphérique extérieure du corps du support de limitation correspond à la forme de la rainure de limitation.

3. Le dispositif électronique selon la revendication 2, dans lequel le corps du support de limitation est constitué d'un matériau rigide.

4. Le dispositif électronique selon la revendication 3, dans lequel le premier élé ment d' ajustement limitant est constitué d'un matériau souple.

5. Le dispositif électronique selon la revendication 4, dans lequel une pluralité de premiers éléments d'ajustement limitants sont disposés, et cette pluralité de premiers éléments d'ajustement limitants sont agencés à intervalles sur le côté de la paroi latérale périphérique intérieure du trou de limitation.

6. Le dispositif électronique selon la revendication 3, dans lequel le second élément d'ajustement limitant est constitué d'un matériau souple.

7. Le dispositif électronique selon la revendication 6, dans lequel une pluralité de seconds éléments d'ajustement limitants sont disposés, et cette pluralité de seconds éléments d'ajustement limitants sont agencés à intervalles sur le côté de la paroi latérale périphérique extérieure du corps du support de limitation.

8. Le dispositif électronique selon l'une quelconque des revendications 1 à 7, dans lequel le module caméra comprend en outre un support de lentille, une puce photosensible et une carte rigide-flexible, et la lentille, le support de lentille, la puce photosensible et la carte rigide-flexible sont reliés en série pour former le module caméra.

9. Le dispositif électronique selon la revendication 8, dans lequel la lentille est reliée au support de lentille par adhésion, et le support de lentille est relié à la carte rigide-souple par adhésion.
